# EUROPEAN PATENT SPECIFICATION

(11) **EP 0 394 032 B1**
(45) Date of publication and mention of the grant of the patent: **28.06.1995**
(21) Application number: 90304194.5
(22) Date of filing: 19.04.1990
(51) Int. Cl.: G11B 7/09, G11B 7/12, G11B 7/08

(54) **Optical pickup device**
Optischer Kopf
Dispositif de lecture optique

(30) Priority: 20.04.1989 JP 101258/89
(43) Date of publication of application: 24.10.1990
(73) Proprietor: SONY CORPORATION, Tokyo 141 (JP)
(72) Inventor: Tomiyama, Takamichi, c/o Patents Division, Shinagawa-ku, Tokyo 141 (JP); Nara, Hitoshi, c/o Patents Division, Shinagawa-ku, Tokyo 141 (JP); Adachi, Osamu, c/o Patents Division, Shinagawa-ku, Tokyo 141 (JP)
(74) Representative: Purvis, William Michael Cameron

(56) References cited:
- EP-A- 0 358 294
- EP-A- 0 376 531
- JP-A- 137 733
- JP-A-60 160 032
- PATENT ABSTRACTS OF JAPAN, unexamined applications, P field, vol. 9, no. 250,October 8, 1985 THE PATENT OFFICE JAPANESE GOVERNMENT page 113 P 394
- PATENT ABSTRACTS OF JAPAN, unexamined applications, P field, vol. 9, no. 246,October 3, 1985 THE PATENT OFFICE JAPANESE GOVERNMENT page 106 P 393
- PATENT ABSTRACTS OF JAPAN, unexamined applications, P field, vol. 10, no. 260,September 5, 1986

## Description

The invention relates generally to an optical pickup device with an objective lens movable in two directions.

Such a device may be used in optical disc recording and/or reproducing apparatus.

Generally, optical disc apparatus utilizes an optical pickup device to write and/or read a signal in and/or from an optical disc. The optical pickup device includes a light source such as a semiconductor laser element. A laser beam emitted from the light source is focused on a signal recording surface of an optical disc and a laser beam reflected on the signal recording surface is detected by an optical detecting element whereby an information signal is written in and/or read from the optical disc.

The optical pickup device includes objective lens driving apparatus to move the objective lens in two axial directions, i.e. a direction (focusing direction) parallel to the optical axis of the objective lens and a direction (tracking direction) perpendicular to the optical axis of the objective lens by an electromagnetic driving force. The objective lens driving apparatus allows the laser beam accurately to scan recorded tracks formed on the signal recording surface of the optical disc.

Objective lens driving apparatus of previously proposed kind and reflecting the subject-matter of the preamble of claim 1 employs a leaf spring as a supporting member for moving the objective lens such that the objective lens can be moved in the two directions (see our Japanese Patent Application JP-A-63-334904).

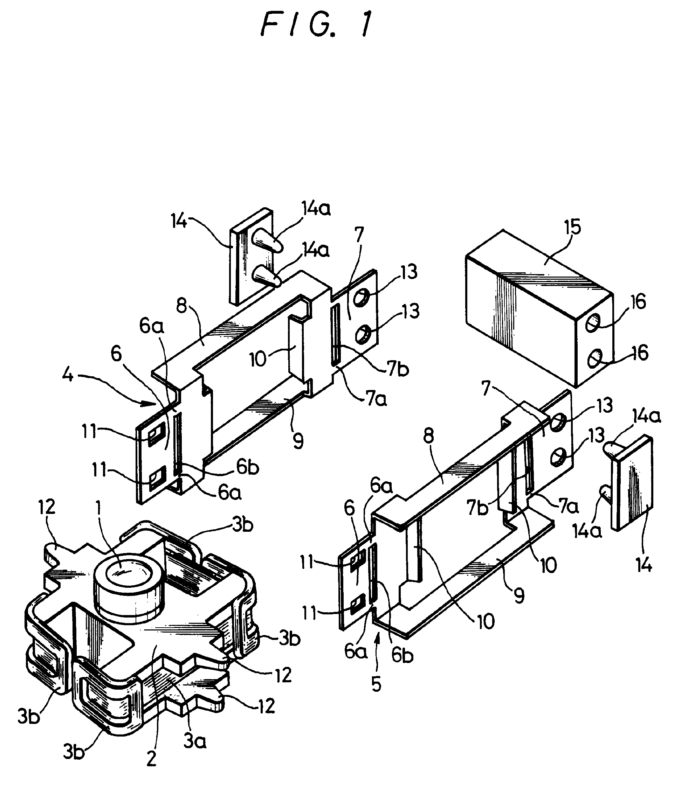

Figure 1 shows an arrangement of this kind of objective lens driving apparatus wherein an objective lens 1 is supported by a bobbin 2. A focusing coil 3a and tracking coils 3b are mounted on the bobbin 2 as electromagnetic driving means to drive the objective lens 1. The bobbin 2 is supported by a pair of support members 4 and 5 provided at the left and right sides of the bobbin 2 such that it can be moved in the first direction (focusing direction, i.e., vertical direction) parallel to the optical axis of the objective lens 1 and in the second direction (tracking direction, i.e., horizontal direction) perpendicular to the optical axis of the objective lens 1. The support members 4 and 5 are formed of leaf springs such as a stainless steel leaf spring having a predetermined rigidity. The support members 4 and 5 are the same in shape and are located symmetrical to each other.

More specifically, each of the leaf springs forming the support members 4 and 5 integrally comprises rear and front support plate portions 6 and 7 and upper and lower arm portions 8 and 9 coupling the two support plate portions 6 and 7. The arm portions 8 and 9 are bent horizontally relative to the vertical support plate portions 6 and 7. Slits 6b and 7b are formed through the vertical support plate portions 6 and 7, respectively, so that displacement portions 6a and 7a are formed on the support plate portions 6 and 7 thereby to enable the objective lens 1 to be moved in the direction perpendicular to the optical axis, i.e., the tracking direction.

There is shown a tab 10 which is bent in order to maintain a predetermined rigidity of the support members 4 and 5 in the vertical direction. Rectangular apertures 11 are formed through the support plate portions at one side, i.e., the front side of the support plate portions 6. When protrusions 12 which project from the side portion of the bobbin 2 are in engagement with the rectangular apertures 11 and the heads of the protrusions 12 are caulked, the bobbin 2 is secured to the front ends of the support members 4 and 5.

Apertures 13 are formed through the other side, i.e., the rear side of the support plate portions 7, and the support members 4 and 5 are attached to a fixed base portion 15 by engaging fixing members 14 into the apertures 13. More precisely, apertures 16 formed through two side portions of the base portion 15 are made corresponding with the apertures 13 of the support members 4 and 5 and protrusions 14a of the fixing members 14 are engaged in the apertures 13 and 16 to be secured thereto.

In this objective lens driving apparatus, a magnet and a yoke are provided at the stationary side in opposing relation to the focusing coil 3a and the tracking coils 3b and a magnetic circuit is constructed between the magnet and the yoke. The magnet and yoke are not shown in Figure 1 because they are not needed to explain the present invention.

In such objective lens driving apparatus, the bobbin 2 is supported by the left and right support members 4 and 5 such that the bobbin 2 can be moved in the two directions. When the tracking coils 3b are supplied with a predetermined tracking current, the displacement portions 6a and 7a of the two support members 4 and 5 are flexed in the horizontal direction in parallel to each other, whereby the bobbin 2 is positionally moved in the second direction perpendicular to the optical axis of the objective lens 1 and tracking is effected. When on the other hand the focusing coil 3a is supplied with a predetermined focusing current, the arm portions 8, 8 and 9, 9 of the two support members 4 and 5 are flexed in the vertical direction in parallel to each other, whereby the bobbin 2 is positionally moved in the first direction parallel to the optical axis of the objective lens 1 and focusing of the laser beam is effected.

In the above-described previously proposed lens driving apparatus, the support members to support the objective lens are independently provided at the left and right sides of the bobbin so that characteristics (spring constant, resonance frequency, etc.) of the leaf springs forming the two support members vary. As a result, the objective lens is not driven regularly, causing the optical axis of the objective lens 1 to be inclined or displaced from the correct state. This phenomenon will be hereinafter referred to as a so-called optical axis inclination or irregularity for simplicity. To avoid this defect, the characteristics of the two leaf springs must be made identical, which requires a strict administration of assembly parts. Consequently, such objective lens driving apparatus become quite expensive. Further, in the assembly process, the two support members must be secured with high positional accuracy, which as a result lengthens the assembly-process. Therefore, such objective lens driving apparatus becomes even more expensive.

European Patent Application EP-A-0358294 (relevant under Article 54(3)EPC) discloses an optical pick-up support moulded from plastic material having four arms serving to support the pick-up.

According to one aspect of the invention there is provided an optical pickup device with an objective lens movable in two directions comprising:
(a) support means, for fixing to a stationary member, having a bobbin to which the objective lens is mounted, a support member formed of a plate shape member having a predetermined rigidity to support the bobbin such that the bobbin may be moved at least in one of a first direction parallel to an optical axis of the objective lens and a second direction perpendicular to the optical axis of the objective lens; and
(b) electromagnetic driving means to drive the bobbin such that the bobbin is moved in said first and second directions, characterized in that the support member of the support means is integrally formed of four arm portions to support the bobbin at one end and a coupling portion to couple the four arm portions at the other end of the four arm portion, each of said arm portions having a plane substantially parallel to a plane perpendicular to the optical axis of the objective lens, whereby the bobbin is moved in the first direction freely, said support member being formed of a thin metal plate, with a flexible printed circuit board attached to the thin metal plate.

According to another aspect of the invention there is provided a method of manufacturing a support member of objective lens driving apparatus in which a bobbin with an objective lens is attached to one end of four arm portions so that the bobbin can be moved in a first direction parallel to an optical axis of the objective lens and/or in a second direction perpendicular to the optical axis of the objective lens and the support member is provided with a coupling portion to couple the four arms at the other end, the method of manufacturing the support member comprising:
(1) a separating step to separate an expanded-shape support member from a thin metal plate with a flexible printed circuit board attached thereto in which a plurality of expanded-shape members are formed, each expanded-shape support member comprising a coupling portion with four arm portions extending therefrom;
(2) a first bending step to bend the expanded-shape member separated in the separating step about lines in a first direction so that the four arm portions have their major plane substantially perpendicular to the major plane of the coupling portion; and
(3) a second bending step to bend the expanded-shape member about lines substantially perpendicular to the first direction so that the four arm portions have a plane substantially parallel to a plane perpendicular to the optical axis of the objective lens, and form a pair of support portions extending substantially normally from the coupling portion, each of the support portions comprising two of the four arm portions.

In an objective lens driving apparatus according to the invention a simplified arrangement can be obtained in which a so-called optical axis inclination or irregularity can be avoided, but assembly of the component parts can be carried out with ease. Furthermore, the flexible printed circuit board has the effect of suppressing resonances in the arm portions.

The invention is diagrammatically illustrated by way of example in the accompanying drawings, in which:-
Figure 1 is an exploded, perspective view of objective lens driving apparatus of previously proposed kind;
Figure 2 is an exploded, perspective view illustrating a first embodiment of objective lens driving apparatus according to the invention;
Figure 3 is a perspective view of the first embodiment of objective lens driving apparatus according to the invention, and illustrating the assembled state of the objective lens driving apparatus;
Figures 4A, 4B and Figures 5A to 5D are respectively perspective views of a support member used in the objective lens driving apparatus of the invention, and to which reference will be made in explaining a manufacturing-process of a leaf spring flexible board and a moulding process of the support member;
Figure 6 is an exploded, perspective view of a second embodiment of objective lens driving apparatus according to the invention; and
Figure 7 is a perspective view of the second embodiment of objective lens driving apparatus, and illustrating the assembled state of the objective lens driving apparatus.

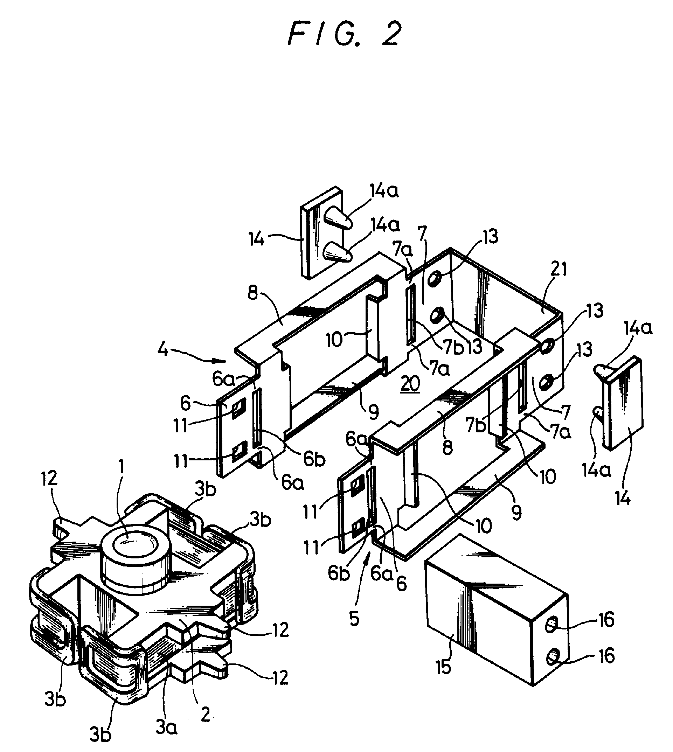

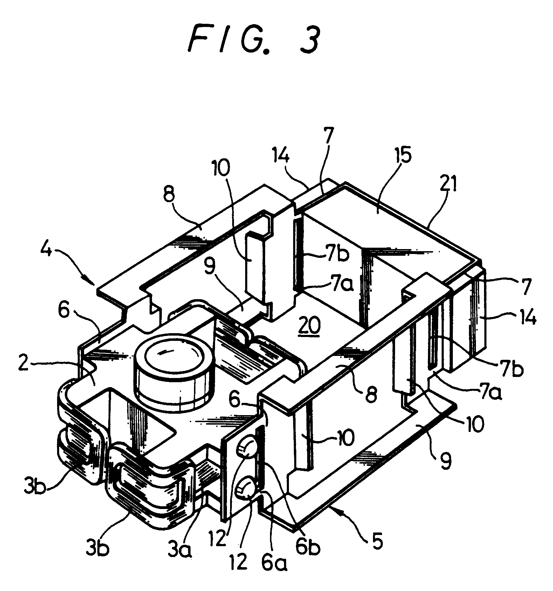

Referring to the drawings and initially to Figures 2 and 3, a support member 20 has integrally formed left and right support portions 4 and 5.

More precisely, a coupling plate member 21, which couples rear support plate portions 7 and 7 of the two support portions 4 and 5, is integrally formed as one body with the support plate portions 7 and 7. A support member 20 is formed of one leaf spring, i.e., formed as one body with four arm portions 8, 8 and 9, 9 to support at one end the bobbin 2 and at the other end has the coupling plate portion 21 which couples the four arm portions 8, 8 and 9, 9.

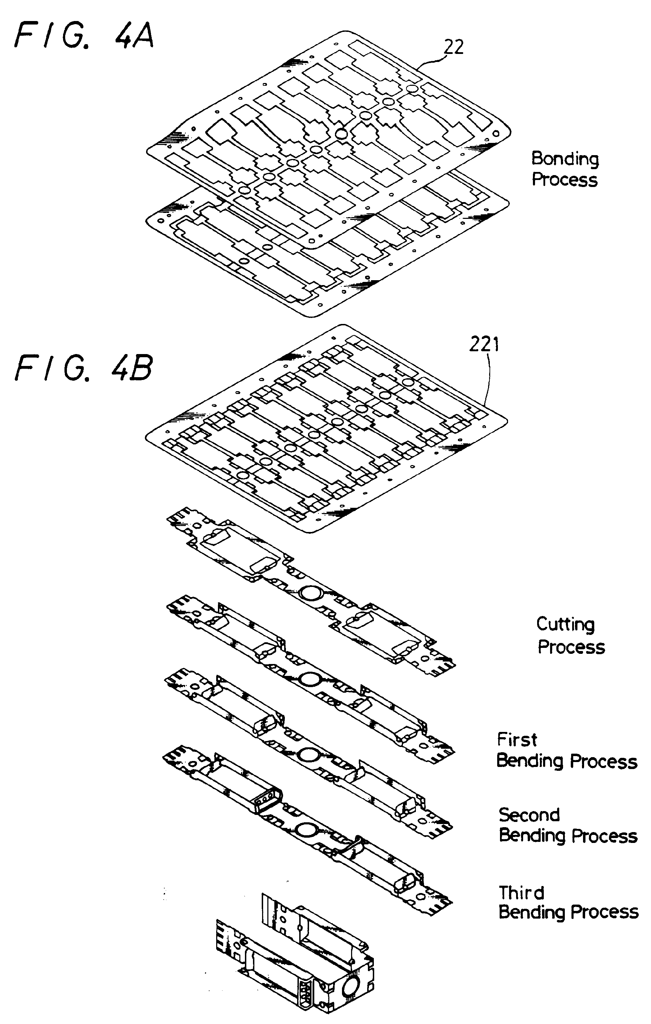

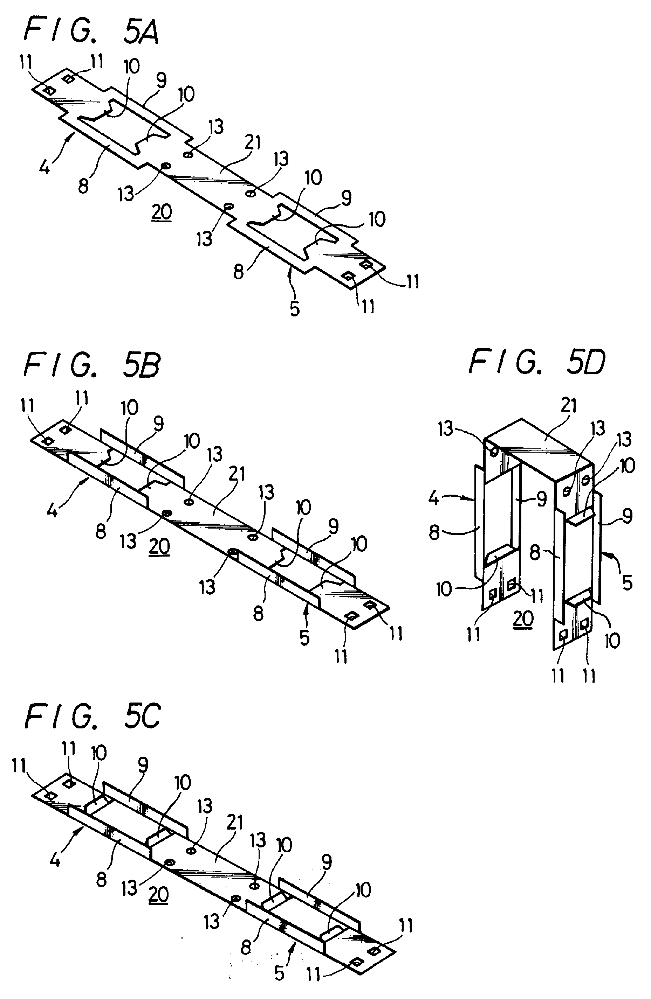

A manufacturing-process for the support member 20 will be described with reference to Figures 4A, 4B and Figures 5A to 5D.

As shown in Figure 4A, a plurality of support members 20 expanded by an etching-treatment or by a punching-treatment are formed on a single thin metal plate 22. A plurality of leaf springs, which form the material of the support member 20, are formed on the single thin metal plate 22 by the punching-treatment simultaneously. Then, this leaf spring is removed from the thin metal plate 22 (see Figure 5A), and the portions corresponding to the arm portions 8 and 9 in this leaf spring are bent at a right angle (see Figure 5B). Simultaneously, the projection member 10 is also bent (see Figure 5C), and then the support portions 4 and 5 are bent at a right angle relative to the central coupling plate portion 21 (see Figure 5D), whereby the support member 20 shown in Figure 2 is obtained.

Before the steps shown in Figure 5A to 5D are effected, a flexible printed circuit board 221, shown in Figure 4B, for supplying electric power to the focusing coil 3a and the tracking coil 3b is bonded on the surface of the thin metal plate 22 by an adhesive agent. The flexible printed circuit board 221 has also such an effect that the resonance of the arm portions 8 and 9, which are formed by bending portions of the thin metal plate 22, can be suppressed.

The means whereby the bobbin 2 is secured to the support member 20 and the means whereby the support member 20 is secured to the stationary base 15 are the same as those described above with reference to Figure 1. More specifically, the projections 12 formed on the side portions of the bobbin 2 are inserted into the apertures 11 formed through the front ends of the two support portions 4 and 5 of the support member 20 and the heads of the projections 12 are caulked. Simultaneously, the projections 14a of the fixing member 14 are engaged into the apertures 13 formed through the rear ends of the two support portions 4 and 5 and the apertures 16 formed through the side portion of the base 15 and secured thereto.

In this objective lens driving apparatus, when the tracking coil 3b is supplied with a predetermined tracking current, the displacement portions 6a and 7a of the two support portions 4 and 5 of the support member 20 are flexed in the horizontal direction in parallel to each other so that the bobbin 2 can be moved in the second direction perpendicular to the optical axis of the objective lens 1, whereby the tracking operation is effected. When the focusing coil 3a is supplied with a predetermined focusing current, the arm portions 8, 8 and 9, 9 of the two support portions 4 and 5 are flexed in parallel to each other so that the bobbin 2 may be moved in the first direction parallel to the optical axis of the objective lens 1, whereby the focusing operation is performed.

The displacement portions 6a and 7a are formed by providing the apertures 6b and 7b through the supporting plate portions 6 and 7, respectively, in the above example. However, it is not always necessary to provide the apertures 6b and 7b. For example, instead of the apertures 6b and 7b, recess portions may be formed from the two edges of each of the support plate portions 6 and 7 so as to form the displacement portions 6a and 7a at the middle portions of the support plate portions 6 and 7 with the same effect being achieved.

The objective lens driving apparatus of this embodiment is constructed as described above, and has significant advantages compared with the prior-art as described below.

Since the left and right support members are integrally formed, that is, the support member 20 is formed of a single leaf spring in the apparatus of the first embodiment, the characteristics of the left and right support portions 4 and 5 will be the same and high positional accuracy can be achieved with ease. Accordingly, the bobbin 2 can be supported in a well-balanced condition and can be smoothly moved, thus making it possible to avoid optical axis inclination or irregularity of the objective lens 1.

Further, since the support member 20 is only a single component, the assembly is facilitated particularly since the number of assembly-processes can be reduced thereby allowing the manufacturing cost to be kept low.

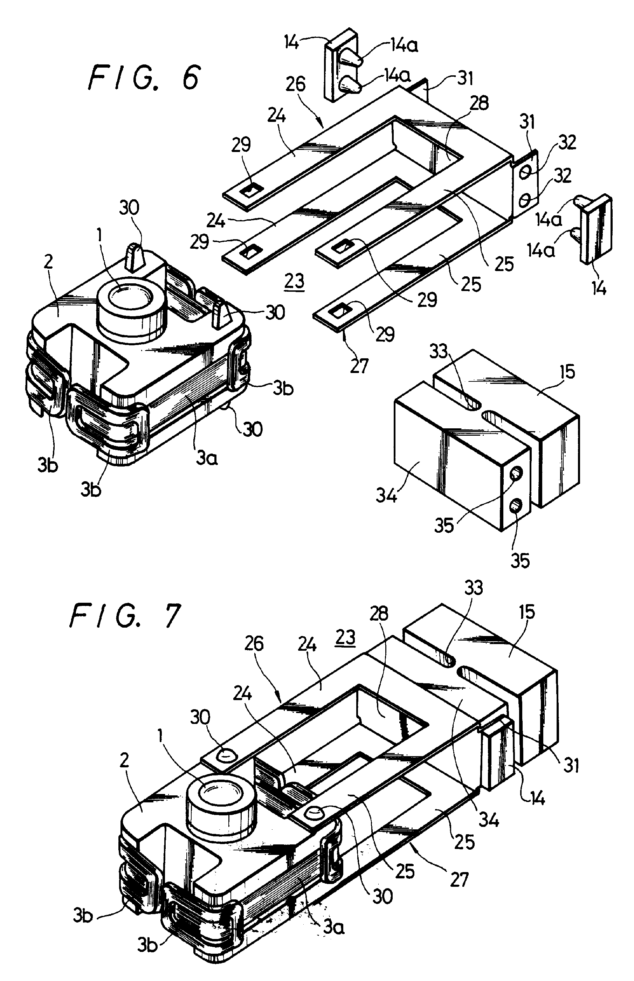

A second embodiment of objective lens driving apparatus is described with reference to Figures 6 and 7. In Figures 6 and 7, parts corresponding to those of Figures 2 and 3 are marked with the same reference numerals and therefore will not be described in detail.

In the second embodiment, the objective lens driving apparatus is provided with a support member to support the objective lens 1 such that the objective lens 1 may be moved only in one direction.

More specifically, as shown in Figures 6 and 7, a support member 23 is formed by one leaf spring which is a combination of upper and lower support portions 26 and 27 having two pairs of arm portions 24 and 25 and a coupling plate portion 28 which couples the four arm portions 24, 24 and 25, 25 of the upper and lower supporting portions 26 and 27 at the rear side thereof. Rectangular apertures 29 are formed through the front ends of the four arm portions 24, 24 and 25, 25 as shown in Figure 6. The apertures 29 are engaged with protrusions 30 protruding from the upper and lower surfaces of the bobbin 2 and the heads of the protrusions 30 are caulked, whereby the bobbin 2 is secured to the front end of the support member 23. Further, projections 31 project from the respective sides of the coupling plate portion 28 of the supporting member 23 and are bent rearwards at a right angle. Apertures 32 are formed through the projections 31.

A movable member 34 is integrally provided at the front surface of the stationary base portion 15 with a connecting portion 33 of small width such that the movable member 34 can be rotated in the horizontal direction. The support member 23 is secured to the movable member 34 by means of the fixing member 14. More precisely, the apertures 32 of the projections 31 correspond with apertures 35 formed through the two side portions of the movable member 34, whereby the protrusions 14a of the fixing member 14 communicate through the two apertures 32 and 35 so as to be inserted and secured thereto.

In the objective lens driving apparatus of the second embodiment thus constructed, when the tracking coil 3b is supplied with a predetermined tracking current, the movable member 34 is rotated about the connection portion 33 thereof relative to the stationary base portion 15 in the horizontal direction, whereby the bobbin 2 is positionally moved in the second direction perpendicular to the optical axis of the objective lens 1 and the tracking operation is performed. When on the other hand the focusing coil 3a is supplied with a predetermined focusing current, the four arm portions 24, 24 and 25, 25 of the supporting member 23 flex in the vertical direction so that the bobbin 2 is positionally moved in the first direction parallel to the optical axis of the objective lens 1, whereby the focusing operation is carried out. In the focusing operation, the support member 23 is formed by the single leaf spring so that the characteristics of the four arm portions 24, 24 and 25, 25 are the same. Therefore, the bobbin 2 is driven in a well-balanced condition, making it possible to prevent optical axis inclination or irregularity of the objective lens 1 from occurring.

## Claims

1. An optical pickup device with an objective lens (1) movable in two directions comprising:
(a) support means, for fixing to a stationary member (15), having a bobbin (2) to which the objective lens (1) is mounted, a support member (20, 23) formed of a plate shape member having a predetermined rigidity to support the bobbin (2) such that the bobbin may be moved at least in one of a first direction parallel to an optical axis of the objective lens and a second direction perpendicular to the optical axis of the objective lens; and
(b) electromagnetic driving means (3a, 3b) to drive the bobbin such that the bobbin is moved in said first and second directions, characterized in that the support member (20, 23) of the support means is integrally formed of four arm portions (8, 9, 24, 25) to support the bobbin at one end and a coupling portion (21, 28) to couple the four arm portions at the other end of the four arm portions, each of said arm portions having a plane substantially parallel to a plane perpendicular to the optical axis of the objective lens, whereby the bobbin is moved in the first direction freely, said support member (20, 23) being formed of a thin metal plate (22), with a flexible printed circuit board (221) attached to the thin metal plate (22).

2. An optical pickup device with an objective lens movable in two directions according to claim 1, wherein the support member (20) is provided with displacement portions (6a, 7a) to move the bobbin in the second direction.

3. An optical pickup device with an objective lens movable in two directions according to claim 1, wherein the support means comprises a movable member (34) having the coupling portion (28) of the support member (23) attached thereto and a stationary member (15) coupled to the movable member (34) by a coupling portion (33) which supports the bobbin (2) such that the bobbin can be rotated in the second direction.

4. A method of manufacturing a support member of objective lens driving apparatus in which a bobbin (2) with an objective lens (1) is attached to one end of four arm (8, 9, 24, 25) portions so that the bobbin (2) can be moved in a first direction parallel to an optical axis of the objective lens (1) and/or in a second direction perpendicular to the optical axis of the objective lens (1) and the support member is provided with a coupling portion (21, 28) to couple the four arms at the other end, the method of manufacturing the support member comprising:
(1) a separating step to separate an expanded-shape support member from a thin metal plate (22) with a flexible printed circuit board (221) attached thereto in which a plurality of expanded-shape members are formed, each expanded-shape support member comprising a coupling portion (21, 28) with four arm portions (8, 9) extending therefrom;
(2) a first bending step to bend the expanded-shape member separated in the separating step about lines in a first direction so that the four arm portions (8, 9) have their major plane substantially perpendicular to the major plane of the coupling portion (21, 28); and
(3) a second bending step to bend the expanded-shape member about lines substantially perpendicular to the first direction so that the four arm portions (8, 9) have a plane substantially parallel to a plane perpendicular to the optical axis of the objective lens, and form a pair of support portions (4, 5) extending substantially normally from the coupling portion (21, 28), each of the support portions (4, 5) comprising two of the four arm portions (8, 9).

5. A method according to claim 4, wherein the first and second bending steps have interposed therebetween a third bending step to bend the expanded-shape member about a line substantially perpendicular to the first direction to form a protrusion (10) remote from the coupling portion (21, 28) which is used to maintain a rigidity of the support member.

## Patentansprüche

1. Optischer Kopf mit einer in zwei Richtungen bewegbaren Objektivlinse (1), umfassend:
(a) eine Halteeinrichtung zur Befestigung an einem stationären Element (15) mit einem Spulenträger (2), an dem eine Objektivlinse (1) befestigt ist, ein Halteelement (20, 23), das aus einem plattenförmigen Element mit einer vorgegebenen Steifigkeit gebildet ist, um den Spulenträger (2) zu halten, so daß der Spulenträger (2) wenigstens in einer ersten Richtung parallel zu einer optischen Achse der Objektivlinse und in einer zweiten Richtung senkrecht zur optischen Achse der Objektivlinse bewegbar ist; und
(b) eine elektromagnetische Antriebseinrichtung (3a, 3b) zum Antrieb des Spulenträgers, so daß der Spulenträger in der ersten und zweiten Richtung bewegbar ist, dadurch gekennzeichnet, daß das Halteelement (20, 23) der Halteeinrichtung integral aus vier Armabschnitten (8, 9, 24, 25) zum Halten des Spulenträgers an einem Ende und aus einem Verbindungsabschnitt (21, 28) zum Verbinden der vier Armabschnitte am anderen Ende der vier Armabschnitte gebildet ist, wobei jeder der Armabschnitte eine Fläche im wesentlichen parallel zu einer Fläche senkrecht zur optischen Achse der Objektivlinse aufweist, wobei der Spulenträger in der ersten Richtung frei bewegbar ist, und daß das Halteelement (20, 23) aus einer dünnen Metallplatte (22) gebildet ist, wobei eine flexible gedruckte Schaltplatine (221) an der dünnen Metallplatte (22) angebracht ist.

2. Optischer Kopf mit einer in zwei Richtungen bewegbaren optischen Linse nach Anspruch 1, wobei das Halteelement (20) mit Biegeabschnitten (6a, 7a) zur Bewegung des Spulenträgers in der zweiten Richtung versehen ist.

3. Optischer Kopf mit einer in zwei Richtungen bewegbaren optischen Linse nach Anspruch 1, wobei die Halteeinrichtung ein mit dem hieran befestigten Verbindungsabschnitt (28) des Halteelements (23) bewegbares Element (34) und ein stationäres Element (15) umfaßt, das mit dem bewegbaren Element (34) über einen Verbindungsabschnitt (33), der den Spulenträger (2) trägt, verbunden ist, so daß der Spulenträger in der zweiten Richtung drehbar ist.

4. Verfahren zur Herstellung eines Halteelements einer Objektivlinsenantriebsvorrichtung, bei welcher ein Spulenträger (2) mit einer Objektivlinse (1) an einem Ende von vier Armabschnitten (8, 9, 24, 25) so angebracht ist, daß der Spulenträger (2) in einer ersten Richtung parallel zu einer optischen Achse der Objektivlinse (1) und/oder in einer zweiten Richtung senkrecht zu der optischen Achse der Objektivlinse (1) bewegbar ist und das Halteelement mit einem Verbindungsabschnitt (21, 28) zur Verbindung der vier Arme an dem anderen Ende versehen ist, wobei das Verfahren zur Herstellung des Halteelements umfaßt:
(1) einen Trennschritt zur Trennung eines ausgebreitet geformten Halteelements von einer dünnen Metallplatte (22), an welcher eine flexible gedruckte Schaltplatine (221) angebracht ist, bei dem eine Mehrzahl von ausgebreitet geformten Elementen gebildet wird, wobei jedes ausgebreitet geformtes Halteelement einen Verbindungsabschnitt (21, 28) mit vier sich hiervon erstreckenden Armabschnitten (8, 9) umfaßt;
(2) einen ersten Biegeschritt zum Biegen des im Trennungsschritt getrennten ausgebreitet geformten Elements um Linien in einer ersten Richtung, so daß die vier Armabschnitte (8, 9) ihre Hauptfläche im wesentlichen senkrecht zu der Hauptfläche des Verbindungsabschnitts (21, 28) haben; und
(3) einen zweiten Biegeschritt zum Biegen des ausgebreitet geformten Elements um Linien im wesentlichen senkrecht zur ersten Richtung, so daß die vier Armabschnitte (8, 9) eine Ebene aufweisen, die im wesentlichen parallel zu einer Ebene senkrecht zur optischen Achse der Objektivlinse ist, und ein Paar Halteabschnitte (4, 5) bilden, die sich im wesentlichen senkrecht vom Verbindungsabschnitt (21, 28) erstrecken, wobei jeder der Halteabschnitte (4, 5) zwei der vier Armabschnitte (8, 9) umfaßt.

5. Verfahren nach Anspruch 4, wobei zwischen dem ersten und dem zweiten Biegeschritt ein dritter Biegeschritt eingeschaltet ist, um das ausgebreitet geformte Element um eine Linie im wesentlichen senkrecht zur ersten Richtung zu biegen, um einen Vorsprung (10) weg von dem Verbindungsabschnitt (21, 28) zu bilden, der zur Aufrechterhaltung einer Steifigkeit des Halteelements verwendet wird.

## Revendications

1. Dispositif de lecture optique ayant une lentille d'objectif (1) déplaçable dans deux directions, comprenant :
a) un moyen de support destiné à être fixé à un organe stationnaire (15), ayant une bobine (2) sur laquelle est montée la lentille d'objectif (1), un organe de support (20, 23) constitué d'un organe en forme de plaque ayant une rigidité prédéterminée pour supporter la bobine (2), de manière que la bobine puisse être déplacée au moins dans une direction parmi une première direction parallèle à un axe optique de la lentille d'objectif et une deuxième direction perpendiculaire à l'axe optique de la lentille d'objectif; et
b) un moyen d'entraînement électromagnétique (3a, 3b) pour entraîner la bobine de manière que la bobine soit déplacée dans lesdites première et deuxième directions, caractérisé en ce que l'organe de support (20, 23) du moyen de support est constitué d'un seul tenant de quatre parties de bras (8, 9, 24, 25) pour supporter la bobine à une extrémité et d'une partie de couplage (21, 28) pour coupler les quatre parties de bras à l'autre extrémité des quatre parties de bras, chacune desdites parties de bras ayant un plan sensiblement parallèle à un plan perpendiculaire à l'axe optique de la lentille d'objectif, de manière que la bobine soit déplacée librement dans la première direction, ledit organe de support (20, 23) étant constitué d'une plaque métallique (22) mince ayant une plaquette de circuits imprimés (221) souple fixée à la plaque métallique (22) mince.

2. Dispositif de lecture optique ayant une lentille d'objectif déplaçable dans deux directions selon la revendication 1, dans lequel l'organe de support (20) est pourvu de parties de déplacement (6a, 7a) pour déplacer la bobine dans la deuxième direction.

3. Dispositif de lecture optique ayant une lentille d'objectif déplaçable dans deux directions selon la revendication 1, dans lequel le moyen de support comprend un organe déplaçable (34) ayant la partie de couplage (28) de l'organe de support (23) lui étant fixée et un organe stationnaire (15), couplé à l'organe déplaçable (34) par une partie de couplage (33) qui supporte la bobine (2), de manière que la bobine puisse être tournée dans la deuxième direction.

4. Procédé de fabrication d'un organe de support d'un appareil d'entraînement de lentille d'objectif, dans lequel une bobine (2) ayant une lentille d'objectif (1) est fixée à une extrémité de quatre parties de bras (8, 9, 24, 25), de manière que la bobine (2) puisse être déplacée dans une première direction parallèle à un axe optique de la lentille d'objectif (1) et/ou dans une deuxième direction perpendiculaire à l'axe optique de la lentille d'objectif (1) et l'organe de support est pourvu d'une partie de couplage (21, 28) pour coupler les quatre bras à l'autre extrémité, le procédé de fabrication de l'organe de support comprenant :
1) une étape de séparation pour séparer un organe de support de forme expansée depuis une plaque métallique (22) mince, ayant une plaquette de circuits imprimés (221) souple lui étant fixée, dans laquelle une pluralité d'organes de forme expansée est formée, chaque organe de support de forme expansée comprenant une partie de couplage (21, 28) à partir de laquelle s'étendent quatre parties de bras (8, 9);
2) une première étape d'incurvation, pour incurver l'organe de forme expansée séparé à l'étape de séparation par rapport à des lignes dans une première direction, de manière que les quatre parties de bras (8, 9) aient leur plan principal sensiblement perpendiculaire au plan principal de la partie de couplage (21, 28); et
3) une deuxième étape d'incurvation pour incurver l'organe de forme expansée autour de lignes sensiblement perpendiculaires à la première direction, de manière que les quatre parties de bras aient un plan sensiblement parallèle à un plan perpendiculaire à l'axe optique de la lentille d'objectif et forment un couple de parties de support (4, 5) s'étendant sensiblement perpendiculairement par rapport à la partie de couplage (21, 28), chacune des parties de support (4, 5) comprenant deux des quatre parties de bras (8, 9).

5. Procédé selon la revendication 4, dans lequel les première et deuxième étapes d'incurvation comportent entre elles une troisième étape d'incurvation pour incurver l'organe de forme expansée par rapport à une ligne sensiblement perpendiculaire à la première direction, pour former une saillie (10) éloignée de la partie de couplage (21, 28) qui est utilisée pour maintenir une certaine rigidité de l'organe de support.
